# FASCICULE DE BREVET EUROPEEN

(11) **EP 1 413 494 B1**
(45) Date de publication et mention de la délivrance du brevet: **25.04.2007**
(21) Numéro de dépôt: 03300145.4
(22) Date de dépôt: 03.10.2003
(51) Int. Cl.: B61L 3/12, H04J 3/06, H04L 7/10

(54) **Procédé d'échange sécuritaire de messages d'information**
Verfahren zum gesicherten Austausch von Informationsnachrichten
Method for secure exchange of information messages

(30) Priorité: 07.10.2002 FR 0212404
(43) Date de publication de la demande: 28.04.2004
(73) Titulaire: Alstom, 92300 Levallois-Perret (FR)
(72) Inventeur: Linares, Michel, 92700 Colombes (FR)
(74) Mandataire: Blot, Philippe Robert Emile

(56) Documents cités:
- EP-A- 0 970 868
- WO-A-93/06662
- US-A- 5 420 883
- US-A- 5 425 025
- US-A- 5 950 966
- US-B1- 6 337 854
- LENNARTZ K: "SIGNALTECHNISCH SICHERE DATENUEBERTRAGUNG IM RAHMEN VON CIRNET" SIGNAL + DRAHT, TELZLAFF VERLAG GMBH. DARMSTADT, DE, vol. 85, no. 4, 1 avril 1993 (1993-04-01), pages 96-101, XP000380305 ISSN: 0037-4997

## Description

L'invention se rapporte à un procédé d'échange sécuritaire de messages d'information envoyés successivement, à intervalles de temps donnés, d'une plate-forme émettrice vers une plate-forme réceptrice. L'invention concerne plus particulièrement un procédé permettant de s'assurer que le dernier message capté par la plate-forme réceptrice correspond au dernier message envoyé par la plate-forme émettrice.

Le procédé selon l'invention trouve notamment une application dans les systèmes de conduite et/ou de supervision de trains, dénommés SACEM (pour "système d'Aide à la Conduite, à l'Exploitation et à la Maintenance") comprenant un poste de commande centralisé, des installations fixes le long des voies et un équipement de commande dans chaque train. Dans de tels systèmes de conduite, le poste de commande centralisé transmet, à intervalles de temps réguliers, des messages d'information aux installations fixes, ces messages comportant des informations relatives aux conditions de circulation sur un ou plusieurs cantons de voie situés en aval de l'installation fixe. L'équipement de commande de tout train se trouvant sur le réseau reçoit alors, des installations fixes, le dernier message d'information reçu par l'installation fixe et en déduit la vitesse de marche à adopter. Lors de l'échange de tels messages d'information il est indispensable, pour des questions de sécurité, d'être sûr que le dernier message reçu par les installations fixes correspond bien au dernier message d'information envoyé par le poste de commande centralisé. Or, compte tenu des différents composants intervenant dans la transmission des messages et de la distance relativement importante pouvant exister entre le poste de commande centralisé et les installations fixes, il est possible que certains messages soient perturbés et retardés dans leur transmission et parviennent tardivement aux installations fixes provoquant ainsi une modification de l'ordre de réception des messages d'information par l'installation fixe par rapport à l'ordre d'émission par le poste de commande centralisé. Dans un tel cas le message d'information actualisé au niveau de l'installation fixe ne correspond plus au dernier message réellement envoyé par le poste de commande centralisé. Bien que de tels phénomènes soient rares, ils doivent absolument être détectés pour assurer la sécurité du trafic.

Classiquement, il est connu pour sécuriser la transmission des messages d'information, d'effectuer des échanges bidirectionnels et permanents des données de sorte que le message d'information reçu par l'installation fixe soit réémis vers le poste de commande centralisé qui s'assure de sa correspondance avec le message d'information envoyé. Toutefois, de tels procédés utilisant des échanges bidirectionnels des données mettent en oeuvre des procédés de traitements complexes nécessitant des dispositifs coûteux à l'arrivée et au départ.

Le brevet US 5 420 883 divulgue des dispositifs de communication et des techniques de réseau de communications employés pour des applications critiques de gestion et de localisation de train. Les techniques de communication utilisées sont basées sur des réseaux à accès par division temporelle (TDMA) combinés à des techniques d'étalement de spectre. Les messages sont horodatés pour permettre de déterminer l'heure d'envoi de ces messages.

Le brevet US 6 337 854 divulgue un procédé de transmission radio électrique dans lequel le temps généré par une horloge est inséré dans les messages émis de façon à ce que le récepteur soit capable de déterminer l'heure d'émission.

Le but de la présente invention est donc de proposer un procédé d'échange sécuritaire de messages d'information qui permette de s'assurer, lors d'échanges successifs unidirectionnels de messages d'information entre une plate-forme émettrice et une plate-forme réceptrice, que le dernier message capté par la plate-forme réceptrice correspond bien au dernier message envoyé par la plate-forme émettrice afin de pouvoir valider la bonne actualisation du message d'information au niveau de la plate-forme réceptrice.

A cet effet, l'invention a pour objet un procédé d'échange sécuritaire de messages d'information envoyés successivement d'une plate-forme émettrice vers une plate-forme réceptrice, caractérisé en ce qu'il comporte :
a) une séquence d'initialisation dans laquelle au moins un message d'initialisation contenant l'information relative à la date t₁ d'envoi du premier message d'information M₁ est échangé entre la plate-forme émettrice et la plate forme réceptrice de sorte que les plates-formes émettrice et réceptrice connaissent alors, l'une et l'autre, la date d'envoi t₁ du premier message d'information M₁.
b) une séquence de transmission des messages d'information dans laquelle :
   - les messages d'information sont envoyés successivement par la plate-forme émettrice à intervalles de temps ΔT_{E} donnés avec une tolérance temporelle d'émission δ (δ < ΔT_{E}), en se basant sur une horloge propre à la plate-forme émettrice, de sorte que le premier message M₁ est émis à la date t₁ de l'horloge et le n^{ième} message Mₙ est envoyé à la date tₙ=t₁+(n-1)_{*}ΔT_{E}+δ, chaque message Mₙ étant codé au moyen d'un code dynamique Cₙ propre à la date tₙ d'envoi du message. Avantageusement, les données des messages d'information sont par ailleurs codées par un codage défini selon les critères de sécurité de l'application, afin de rendre les messages d'information incompréhensibles en cas de dysfonctionnement de la transmission. Ce codage est par exemple le codage SACEM.
   - les messages reçus par la plate-forme réceptrice sont traités en fonction de leur date de réception tᵣ en se basant sur une horloge propre à la plate-forme réceptrice de sorte que les messages reçus dans une fenêtre d'observation Fₙ au voisinage de tₙ sont décodés avec une séquence de décodage DCₙ adaptée pour décoder le code dynamique Cₙ, l'horloge de la plate-forme réceptrice étant calée à la date t₁ à la réception du premier message M₁.

Selon des modes particuliers de réalisation, le procédé selon l'invention peut comprendre l'une ou plusieurs des caractéristiques suivantes prises isolément ou selon toutes les combinaisons techniquement possibles :
- lors de la séquence d'initialisation a), d'une part un message d'initialisation M₀ codé est envoyé depuis la plate-forme émettrice vers la plate-forme réceptrice, et d'autre part un message d'initialisation M'₀ codé est envoyé depuis la plate-forme réceptrice vers la plate-forme émettrice, ces messages d'initialisation M₀, M'₀ contenant l'information relative à la date t₁ d'envoi du premier message d'information M₁, les dits messages d'initialisation M₀. M'ₙ étant décodés par les plates-formes émettrice et réceptrice qui connaissent alors de la date d'envoi t₁ du premier message d'information M₁ :

- en cas de non-réception du premier message M₁ dans un temps alloué après la réception du message d'initialisation, l'horloge de la plate-forme émettrice est automatiquement calée à la date t₁ à l'instant correspondant à la fin du temps alloué ;
- la fenêtre d'observation Fₙ correspond à une fenêtre de temps [t₁+(n-1)_{*}ΔT_{E}-ΔT_{F*}ε, t₁+(n-1)_{*}ΔT_{E}+ΔT_{F}*(1-ε)] , où n est un nombre entier et ΔT_{F} correspond à la largeur de la fenêtre d'observation et répond à la relation ΔT_{F} ≤ ΔT_{E}, et où ε est compris entre 0 et 1 ;
- un signal de synchronisation d'horloge est émis régulièrement par la plate-forme émettrice, entre l'émission des messages Mₙ, ce signal de synchronisation étant utilisé pour corriger dynamiquement la fréquence ou la phase de l'horloge interne de la plate-forme réceptrice afin de réduire l'écart de phase ou de fréquence entre les horloges internes des plates-formes réceptrice et émettrice ;
- les messages d'information décodés par la plate-forme réceptrice sont transmis à un module de traitement de l'information :

- les messages reçus par la plate-forme réceptrice au cours d'une fenêtre d'observation Fₙ sont stockés de façon séquentielle dans une mémoire ne pouvant stocker qu'un seul message à la fois et en ce que seul le message stocké dans cette mémoire à la fin de la fenêtre d'observation Fₙ est transmis au module de traitement de l'information ;
- la plate-forme émettrice appartient à un poste de commande centralisé d'un système de supervision et de conduite du trafic ferroviaire et la plate-forme réceptrice appartient à une installation fixe disposée en bordure d'une voie ferrée et en ce que le module de traitement de l'information est constitué d'un équipement de commande disposé à bord d'un train circulant sur un canton de voie associé à l'installation fixe.

On comprendra mieux les buts, aspects et avantages de la présente invention, d'après la description donnée ci-après d'un mode particulier de réalisation de l'invention, présenté à titre d'exemple non limitatif, en se référant aux dessins annexés, dans lesquels :
- la figure 1 est une représentation partielle et schématique d'une installation de supervision de trains équipée d'un procédé d'échange sécuritaire de message d'information selon l'invention.
- la figure 2 est un organigramme représentant les principales étapes du procédé d'émission mis en oeuvre par la plate-forme émettrice conformément au procédé d'échange sécuritaire selon l'invention.
- la figure 3 est un organigramme représentant les principales étapes du procédé de traitement mis en oeuvre par la plate-forme réceptrice conformément au procédé d'échange sécuritaire selon l'invention.
- la figure 4 illustre sur une échelle temporelle, l'émission de messages d'information depuis une plate-forme émettrice et la réception des messages sur une plate-forme réceptrice et leur traitement conformément au procédé d'échange sécuritaire selon l'invention.

Pour faciliter la lecture du dessin, seuls les éléments nécessaires à la compréhension de l'invention ont été représentés. Les mêmes éléments portent les mêmes références d'une figure à l'autre.

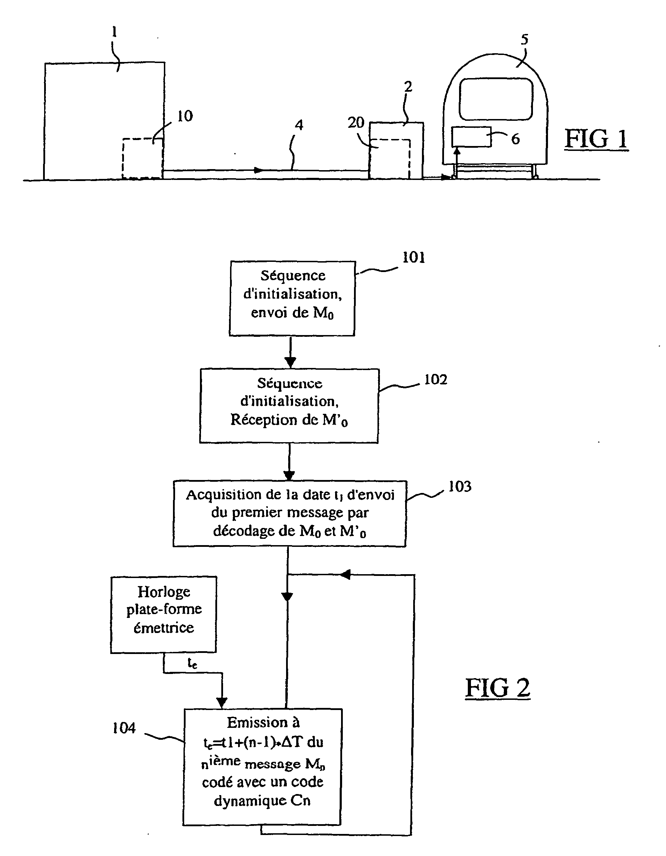

La figure 1 représente schématiquement un poste de commande centralisé 1 communiquant des messages d'information à des installations fixes 2 disposées en bordure d'un canton de voie ferrée, ces messages comportant des informations relatives aux conditions de circulation sur un ou plusieurs cantons de voie situés en aval de l'installation fixe 2. Ces messages sont ensuite transmis depuis les installations fixes 2 vers un train 5 de manière connue par un circuit de voie, le train 5 comportant un équipement de commande 6 utilisant ces messages d'information pour déterminer notamment la marche à suivre, telle que la vitesse à adopter ou la nécessité de déclencher un arrêt d'urgence.

Pour effectuer la transmission des messages d'information, le poste de commande centralisé 1 comporte une plate-forme émettrice 10 reliée par des câbles de transmission 4 à une plate-forme réceptrice 20 disposée dans l'installation fixe 2. Chaque plate-forme émettrice 10 et réceptrice 20 comporte une horloge interne.

La séquence d'émission des messages d'information par la plate-forme émettrice 10 dans le procédé d'échange sécurisé selon l'invention va maintenant être décrite en relation avec la figure 2.

Conformément à cette figure, dans une première étape 101 du procédé d'échange sécuritaire, une séquence d'initialisation est effectuée au cours de laquelle un message d'initialisation M₀ codé est transmis du poste de la plate-forme émettrice 10 à la plate-forme réceptrice 20. Ce message M₀ contient une partie de l'information de la date initiale du premier message d'information, générée par la plate-forme émettrice, par exemple un nombre aléatoire. Dans une deuxième étape 102, la plate-forme émettrice reçoit le message M'₀ qui est émis par la phlte-forme réceptrice. Ce message M'₀ contient une partie de l'information de la date initiale du premier message d'information, générée par la plate-forme réceptrice, par exemple un nombre aléatoire. Ces messages M_{0,} M'₀ sont décodés, dans une étape 103 par la plate-forme émettrice 10 pour générer la date initiale du premier message. Eventuellement une partie implicite complète cette date initiale.

La sécurité de transmission de la séquence d'initialisation est assurée classiquement par un échange bidirectionnel permettant de s'assurer de la bonne corrélation entre le message reçu et le message envoyé.

La séquence d'initialisation précédemment décrite est suivie d'une étape 104 du procédé dans laquelle aucun message n'est envoyé par la plate-forme émettrice 10 jusqu'à ce que le temps tₑ de l'horloge interne de la plate-forme émettrice 10 atteigne la date t₁ prévue pour l'envoi du premier message M₁. A la date t₁, la plate-forme émettrice 10 envoie le premier message M₁, des messages étant ensuite envoyés à intervalle de temps ΔT_{E} constant de sorte que le n^{ième} message Mₙ est envoyé à la date tₙ=t₁+(n-1)*ΔT_{E}+δ, n étant un nombre entier, δ est la tolérance temporelle d'émission (δ < ΔT_{E}).

Selon une caractéristique de l'invention, chaque message Mₙ envoyé est codé avec un code dynamique Cₙ propre à la date d'envoi tₙ du message. Ce code dynamique Cₙ est du type choisi parmi les codes dynamiques connus qui possèdent des propriétés de codage telles que le décodage du message Mₙ avec une séquence de décodage autre que la séquence de décodage DCₙ prévue pour décoder le code Cₙ conduit à l'obtention d'un message incompréhensible grâce au codage défini au niveau de l'application. A titre d'exemple, le codage choisi est une surimposition d'une séquence pseudo-aléatoire basée sur le polynôme primitif X³² + X²² + X² + X + 1 appliquée à chacun des bits des données.

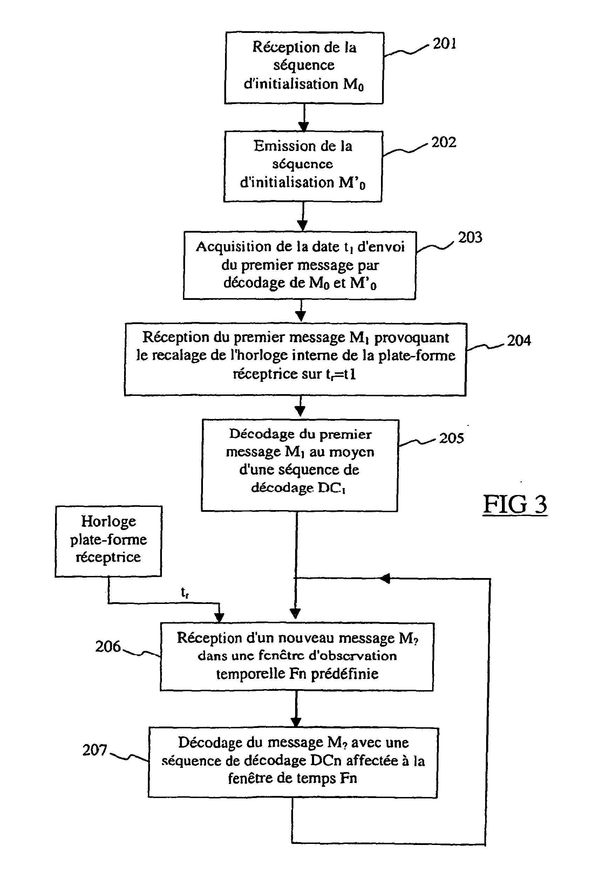

Le traitement effectué parallèlement par la plate-forme réceptrice 20, lors de la séquence de transmission des messages d'information par la plate-forme émettrice 10, va maintenant être décrit en relation avec la figure 3.

Conformément à la figure 3, la plate-forme réceptrice 20 reçoit, dans une première étape 201 du procédé, le message M₀ contenu dans la séquence d'initialisation émise par la plate forme émettrice lors de l'étape 101. Dans une deuxième étape 202, la plate-forme réceptrice 20 émet le message M'₀ qui est reçu par la plate-forme émettrice lors de l'étape 102. Dans une étape 203, ces messages M₀. M'ₙ sont décodés par la plate-forme réceptrice 20, pour obtenir la date initiale t1 du premier message M₁, comme dans l'étape 103 pour la plate-forme émettrice.

Dans une étape 204 suivante du procédé déclenchée lorsque la plate-forme réceptrice 20 reçoit le premier message M₁, l'horloge interne de la plate-forme réceptrice 20 est calée sur la date t₁ de sorte que tᵣ=t₁ à l'instant de réception de ce premier message M₁, où tᵣ est le temps sur l'horloge interne de la plate-forme réceptrice 20. L'horloge interne de la plate-forme réceptrice 20 est également calée par défaut sur la date t₁, si le premier message M₁ ne parvient pas à la plate-forme réceptrice 20 dans un temps alloué après la réception du message d'initialisation M₀.

De manière préférentielle, après la réception du message t₁, l'horloge de la plate-forme réceptrice 20 est synchronisée régulièrement sur l'horloge de la plate-forme émettrice 10 à partir de trames de synchronisation d'horloge émises régulièrement par la plate-forme émettrice 10 au même cycle que les messages Mₙ. Ces trames sont soit spécifiques ou constituées des messages Mₙ eux mêmes. Ainsi, lorsqu'un écart de synchronisation (phase, fréquence, moyenne, moindres carrés ...) est mesuré entre l'horloge interne de la plate-forme émettrice 10 et l'horloge interne de la plate-forme réceptrice 20, une correction de la fréquence ou de la phase de l'horloge interne de la plate-forme réceptrice 20 est réalisée dynamiquement de sorte de réduire l'écart de phase ou de fréquence entre les deux horloges.

Au cours de l'étape suivante 205 du procédé, le premier message M₁ reçu est décodé au moyen d'une séquence de décodage DC₁ adaptée pour décoder le code dynamique C₁ et le résultat du message M₁ décodé est transmis par la plate-forme réceptrice 20 au circuit de voie.

L'étape 206 suivante du procédé est déclenchée de manière itérative lorsque la plate-forme réceptrice 20 reçoit un nouveau message M_{?}, à priori le message Mₙ, à un instant tᵣ compris dans une fenêtre d'observation temporelle Fₙ correspond à une fenêtre de temps [t₁+(n-1)_{*}ΔT_{E} - ΔT_{F}*ε, t₁+(n-1)_{*}ΔT_{E} + ΔT_{F}*(1-ε)], où ΔT_{F} est la largeur de la fenêtre d'observation, n est un nombre entier et ε est compris entre 0 et 1.

Au cours de l'étape 207 suivante du procédé, le message M_{?} reçu dans une fenêtre d'observation Fₙ de la plate-forme émettrice 20 est décodé au moyen d'une séquence de décodage DCₙ affectée à cette fenêtre d'observation Fₙ et correspondant à la séquence codage inverse DCₙ adaptée pour décoder uniquement le code dynamique Cₙ du n^{ième} message émis par la plate-forme émettrice 10.

Dans un mode de réalisation préférentiel de l'invention, le message M_{?} décodé par la plate-forme réceptrice 20 est alors, dans une étape non représentée sur la figure 3, stocké temporairement dans une mémoire possédant une capacité permettant de ne stocker qu'un seul message à la fois, avant d'être envoyé au circuit de voie à l'instant tᵣ correspondant à la fin de la fenêtre d'observation Fₙ. Dans une variante simplifiée, le message M_{?} peut également être transmis au circuit de voie dès la fin de l'étape 207, sans être stocké dans une mémoire.

Le train 5 se trouvant sur le canton de voie reçoit alors, par l'intermédiaire du circuit de voie, les messages décodés par la plate-forme réceptrice 20 avec l'assurance que les messages M_{?} reçus devenus compréhensibles grâce au décodage défini au niveau de l'application sont des messages Mₙ correctement actualisés, dont il faut prendre en compte les informations. Par ailleurs, pour assurer la sécurité de la circulation des trains sur la voie, il est prévu que l'équipement de commande 6 à bord du train 5 déclenche un arrêt d'urgence lorsque le train 5 reçoit successivement plusieurs messages incompréhensibles, par exemple cinq messages de suite, de sorte que le train s'arrête lorsqu'il n'est plus suffisamment renseigné sur les conditions de circulation du canton de voie en aval.

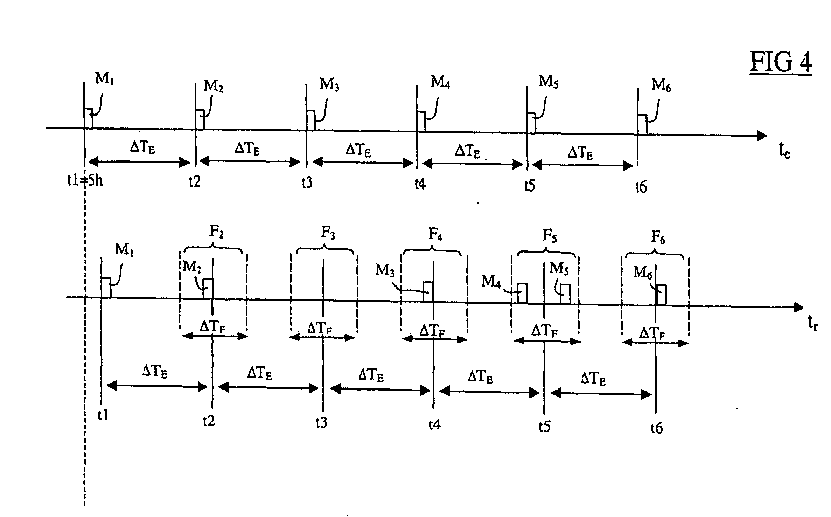

La figure 4 illustre, à titre d'exemple, une séquence d'échange de messages d'information conformément au procédé selon l'invention. Sur cette figure, l'émission des messages M₁ à M₆ est représentée sur l'axe supérieur tₑ, cet axe correspondant à l'écoulement du temps sur l'horloge interne de la plate-forme émettrice 10, et la réception des messages est représentée sur l'axe tᵣ correspondant à l'écoulement du temps sur l'horloge de la plate-forme réceptrice 20. On considérera pour l'exemple décrit à la figure 4 que la séquence d'initialisation, non représentée sur la figure, est initiée à l'instant tₑ=4h59mn et que la date t₁ d'envoi du premier message est t₁=5h. L'intervalle ΔT_{E} est de l'ordre de quelques millisecondes, par exemple ΔT_{E}=50 ms, de sorte que la mise à jour des messages d'information soit régulière. Dans l'exemple représenté, la tolérance temporelle d'émission δ est nulle et les fenêtres d'observation Fₙ présentent les caractéristiques ε=0,5 et ΔT_{F}=25ms.

Ainsi, en se reportant à la figure 4 et notamment à la réception des messages sur l'axe inférieur tᵣ représentant l'écoulement du temps au niveau de l'horloge de la plate-forme réceptrice 20, quelques instants après l'émission du message M₁ la plate-forme réceptrice 20 reçoit le premier message M₁. La plate-forme réceptrice 20 procède alors au calage de son horloge interne de sorte que tᵣ=t₁ à l'instant de réception du message M₁. Le message M₁ est ensuite décodé par la plate-forme réceptrice au moyen de la séquence de décodage DC₁ puis est transmis au circuit de voie et donc à un éventuel train 5 présent sur le canton de voie.

Quelques instants plus tard, la plate-forme réceptrice 20 reçoit le message M₂ dans la fenêtre d'observation F₂ centrée sur t₂ et de largeur ΔT_{F}. La plate forme réceptrice 20 procède alors au décodage du message M₂ avec la séquence de décodage DC₂. Ce message décodé est stocké dans une mémoire de la plate forme réceptrice possédant une capacité permettant de ne stocker qu'un seul message à la fois puis est transmis au circuit de voie à l'instant tᵣ correspondant à la fin de la fenêtre d'observation F₂ soit tᵣ =t₂+ΔT_{F}/2. L'équipement de commande 6 du train 5 se trouvant sur le canton de voie est alors renseigné par le message M₂ sur les conditions de circulation.

Au cours de la fenêtre d'observation F₃, aucun message n'est reçu par la plate-forme réceptrice 20, suite à des perturbations dans la transmission du message M₃ Dans ce cas, le message transmis par la plate-forme réceptrice 20 au circuit de voie à l'instant tᵣ correspondant à la fin de la fenêtre d'observation F₃, est incompréhensible grâce au codage de l'application, de sorte que l'équipement de commande 6 du train 5 se trouvant sur le canton de voie soit renseigné sur ce défaut d'actualisation des messages d'information.

Le message M₃ étant finalement reçu dans la fenêtre d'observation F₄, ce message M₃ est alors décodé avec la séquence de décodage DC₄ affecté à la fenêtre F₄ ce qui conduit à l'obtention d'un message décodé incompréhensible grâce au codage de l'application qui est stocké dans la mémoire de la plate-forme réceptrice 20. Ce message incompréhensible est transmis au circuit de voie à l'instant tᵣ correspondant à la fin de la fenêtre d'observation F₄ et l'équipement de commande 6 du train 5 reçoit ce message incompréhensible qu'il interprète comme un nouveau défaut d'actualisation des messages d'information. L'équipement de commande 6 comptabilise alors deux défauts successifs d'actualisation des messages d'information mais ne provoque pas encore d'arrêt d'urgence du train si la tolérance permise est de cinq défauts successifs.

Au cours de la fenêtre d'observation F₅, deux messages M₄ et M₅ sont successivement reçus par la plate-forme réceptrice 20. Dans un premier temps la plate-forme réceptrice 20 reçoit le message M₄ puis le message M₅ dans la même fenêtre d'observation F₅. La plate-forme réceptrice procède au décodage de ce dernier message M₅, au moyen de la séquence de décodage DC₅ aboutissant à l'obtention d'un message décodé à nouveau compréhensible grâce au codage de l'application, qui est stocké dans la mémoire de la plate-forme réceptrice 20 à la place du précédent message. Ce message M₅ est transmis au circuit de voie à l'instant tᵣ correspondant à la fin de la fenêtre d'observation F₅. L'équipement de commande 6 du train 5 reçoit alors un message compréhensible grâce au codage de l'application, le message M₅ avec l'assurance que les informations contenues dans ce message sont des informations correctement actualisées.

Au cours de la fenêtre d'observation F₆, la plate-forme réceptrice 20 reçoit le message M₆ qui est décodé par la séquence de décodage DC₆ puis stocké dans la mémoire avant d'être envoyé au circuit à l'instant t₁ correspondant à la fin de la fenêtre F₆. L'équipement de commande 6 du train 5 reçoit alors un message compréhensible grâce au codage de l'application, le message. M₆ avec l'assurance que les informations contenues dans ce message sont des informations actualisées.

Ainsi, un tel procédé de transmission d'échange sécuritaire de messages d'information permet, par un échange régulier unidirectionnel de messages entre une plate-forme émettrice et une plate-forme réceptrice, de garantir la bonne actualisation des messages d'information qui parviennent de façon compréhensible au destinataire et ceci sans faire appel à des moyens de traitement complexes. Un tel procédé présente l'avantage d'être peu coûteux à mettre en oeuvre et de permettre une grande vitesse de transmission des informations à l'inverse des systèmes de transmission bidirectionnels habituels dans lequel la séquence de vérification de l'information ralentie considérablement la transmission des messages et donc leur prise en compte. Le procédé selon l'invention permet donc d'avoir une grande cadence de rafraîchissement des messages d'information reçu par le train.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Procédé d'échange sécuritaire de messages d'information envoyés successivement d'une plate-forme émettrice (10) vers une plate-forme réceptrice (20), ledit procédé comportant:
a) une séquence d'initialisation est échangée entre la plate-forme émettrice (10) et la plate-forme réceptrice (20) de sorte que les dites plates-formes émettrice (10) et réceptrice (20) connaissent alors la date d'envoi t₁ du premier message d'information M₁.
b) une séquence de transmission des messages d'information dans laquelle :
- les messages d'information sont envoyés successivement par la plate-forme émettrice (10) à intervalles de temps ΔT_{E} donnés avec une tolérance temporelle d'émission δ, en se basant sur une horloge propre à la plate-forme émettrice (10), de sorte que le premier message M₁ est émis à la date t₁ de la dite horloge et le n^{ième} message Mₙ est envoyé à la date tₙ=t₁+(n-1)_{*}ΔT_{E}+δ, **caractérisé en ce que** la séquence d'initialisation comprend an moins un message d'initialisation contenant l'information relative à la date t₁ d'envoi du premier message d'information M₁, chaque message Mₙ est codé au moyen d'un code dynamique Cₙ propre à la date tₙ d'envoi du dit message; et
les messages reçus par la plate-forme réceptrice (20) sont traités en fonction de leur date de réception tᵣ en se basant sur une horloge propre à la plate-forme réceptrice (20) de sorte que les messages reçus dans une fenêtre d'observation Fₙ au voisinage de tₙ sont décodés avec une séquence de décodage DCₙ adaptée pour décoder le code dynamique Cₙ, la dite horloge de la plate-forme réceptrice (20) étant calée à la date t₁ à la réception du premier message M₁.

2. Procédé d'échange sécuritaire de messages d'information selon la revendication 1, **caractérisé en ce que** lors de la séquence d'initialisation a), d'une part un message d'initialisation M₀ codé est envoyé depuis la plate-forme émettrice (10) vers la plate-forme réceptrice (20), et d'autre part un message d'initialisation M'₀ codé est envoyé depuis la plate-forme réceptrice (20) vers la plate-forme émettrice (10), ces messages d'initialisation M₀, M'₀ contenant l'information relative à la date t₁ d'envoi du premier message d'information M₁, les dits messages d'initialisation M₀, M'₀ étant décodés par les plates-formes émettrice (10) et réceptrice (20) qui connaissent alors de la date d'envoi t₁ du premier message d'information M₁.

3. Procédé d'échange sécuritaire de messages d'information selon l'une quelconque des revendications 1 à 2, **caractérisé en ce qu'**en cas de non-réception du premier message M₁ dans un temps alloué après la réception du message d'initialisation, l'horloge de la plate-forme émettrice (20) est automatiquement calée à la date t₁ à l'instant correspondant à la fin du temps alloué.

4. Procédé d'échange sécuritaire de messages d'information selon l'une quelconque des revendications 1 à 3, **caractérisé en ce que** la dite fenêtre d'observation Fₙ correspond à une fenêtre de temps [t₁+(n-1)_{*}ΔT_{E}-ΔT_{F}*ε, t₁+(n-1)_{*}ΔT_{E}+ΔT_{F}*(1-ε)], uù ΔT_{F} correspond à la largeur de la fenêtre d'observation et répond à la relation ΔT_{F} ≤ ΔT_{E} et où ε est compris entre 0 et 1.

5. Procédé d'échange sécuritaire de messages d'information selon l'une quelconque des revendications 1 à 4, **caractérisé en ce qu'**un signal de synchronisation d'horloge est émis régulièrement par la plate-forme émettrice (10), entre l'émission des messages Mₙ, ce signal de synchronisation étant utilisé pour corriger dynamiquement la fréquence ou la phase de l'horloge interne de la plate-forme réceptrice (20) afin de réduire l'écart de phase ou de fréquence entre les horloges internes des plates-formes réceptrice (20) et émettrice (10).

6. Procédé d'échange sécuritaire de messages d'information selon l'une quelconque des revendications 1 à 5, **caractérisé en ce que** les messages d'information décodés par la plate forme réceptrice (20) sont transmis à un module de traitement de l'information (6).

7. Procédé d'échange sécuritaire de message d'information selon l'une quelconque des revendications 1 à 6, **caractérisé en ce que** les messages reçus par la plate-forme réceptrice (20) au cours d'une fenêtre d'observation Fₙ sont stockés de façon séquentielle dans une mémoire ne pouvant stocker qu'un seul message à la fois et **en ce que** seul le message stocké dans cette mémoire à la fin de la dite fenêtre d'observation Fₙ est transmis au module de traitement de l'information (6).

8. Procédé d'échange sécuritaire de message d'information selon l'une quelconque des revendications 1 à 7, **caractérisé en ce que** la plate-forme émettrice (10) appartient à un poste de commande centralisé (1) d'un système de supervision et de conduite du trafic ferroviaire et la plate-forme réceptrice (20) appartient à une installation fixe (2) disposée en bordure d'une voie ferrée et **en ce que** le dit module de traitement de l'information (6) est constitué d'un équipement de commande disposé à bord d'un train (5) circulant sur un canton de voie associé à la dite installation fixe (2).

## Claims

1. Method for the secure exchange of information messages sent successively from a transmitting platform (10) towards a receiving platform (20), said method comprising:
a) an initialisation sequence is exchanged between the transmitting platform (10) and the receiving platform (20) so that said transmitting (10) and receiving (20) platforms then know the sending date t₁ of the first information message M₁;
b) a transmission sequence of the information messages in which:
- the information messages are sent successively by the transmitting platform (10) at given time intervals ΔT_{E} with a transmission time tolerance δ, being based on a clock belonging to the transmitting platform (10) so that the first message M₁ is transmitted at date t₁ of said clock and the n^{th} message Mₙ is sent at date tₙ=t₁+(n-1)_{*}ΔT_{E}+ δ,
**characterised in that** the initialisation sequence includes at least one initialisation message containing information relating to the sending date t₁ of the first information message M₁, each message Mₙ is coded by means of a dynamic code Cₙ specific to the sending date tₙ of said message; and the messages received by the receiving platform (20) are processed as a function of their date of receipt t_{f}, being based on a clock belonging to the receiving platform (20) so that the messages received in an observation window Fₙ in the vicinity of tₙ are decoded with a decoding sequence DCₙ adapted to decode the dynamic code Cₙ, said clock of the receiving platform (20) being fixed at the date t₁ of receipt of the first message M₁.

2. Method for the secure exchange of information messages according to Claim 1, **characterised in that** during the initialisation sequence a), firstly a coded initialisation message M₀ is sent from the transmitting platform (10) to the receiving platform (20), and secondly a coded initialisation message M'₀ is sent from the receiving platform (20) to the transmitting platform (10), these initialisation messages M₀, M'₀ containing information relating to the sending date t₁ of the first information message M₁, said initialisation messages M₀, M'₀ being decoded by the transmitting (10) and receiving (20) platforms, which then know the sending date t₁ of the first information message M₁.

3. Method for the secure exchange of information messages according to any one of Claims 1 to 2, **characterised in that** in the case of non-receipt of the first message M₁ in an allocated time after receipt of the initialisation message, the clock of the transmitting platform (20) is automatically fixed at date t₁ at the instant corresponding to the end of the allocated time.

4. Method for the secure exchange of information messages according to any one of Claims 1 to 3, **characterised in that** said window of observation Fₙ corresponds to a time window [t₁+(n-1)_{*}ΔT_{E}-ΔT_{F}* ε, t₁+(n-1)*ΔT_{E}+ΔT_{F}*(1-ε)], wherein ΔT_{F} corresponds to the width of the observation window and meets the relation ΔT_{F}≤ΔT_{E}, and where ε is in the range of between 0 and 1.

5. Method for the secure exchange of information messages according to any one of Claims 1 to 4, **characterised in that** a clock synchronisation signal is transmitted regularly by the transmitting platform (10) between the transmission of messages Mₙ, this synchronisation signal being used to dynamically correct the frequency or phase of the internal clock of the receiving platform (20) in order to reduce the phase or frequency difference between the internal clocks of the receiving (20) and transmitting (10) platforms.

6. Method for the secure exchange of information messages according to any one of Claims 1 to 5, **characterised in that** the information messages decoded by the receiving platform (20) are transmitted to a data processing module (6).

7. Method for the secure exchange of information messages according to any one of Claims 1 to 6, **characterised in that** the messages received by the receiving platform (20) during a window of observation Fₙ are stored sequentially in a memory only capable of storing a single message at once, and **in that** only the message stored in this memory at the end of said window of observation Fₙ is transmitted to the data processing module (6).

8. Method for the secure exchange of information messages according to any one of Claims I to 7, **characterised in that** the transmitting platform (10) forms pan of a central control unit (1) of a rail traffic monitoring and control system, and the receiving platform (20) forms part of a fixed installation (2) located at the edge of a rail track, and **in that** said data processing module (6) comprises a control assembly on board a train (5) travelling on a section of track connected to said fixed installation (2).

## Patentansprüche

1. Verfahren zum gesicherten Austausch von Informationsnachrichten, die nacheinander von einer sendenden Plattform (10) zu einer empfangenden Plattform (20) gesendet werden, wobei das Verfahren umfasst:
a) eine Initialisierungssequenz, die zwischen der sendenden Plattform (10) und der empfangenden Plattform (20) ausgetauscht wird, so dass diese sendende Plattform (10) und diese empfangende Plattform (20) nun den Sendezeitpunkt t₁ der ersten Informationsnachricht M₁ kennen,
b) eine Sequenz der Übertragung der Informationsnachrichten, in der:
- die Informationsnachrichten nacheinander von der sendenden Plattform (10) in gegebenen Zeitintervallen ΔT_{E} mit einer Sendezeittoleranz δ gesendet werden, und zwar auf der Basis einer der sendenden Plattform (10) gehörenden Uhr, so dass die erste Nachricht M₁ zum Zeitpunkt t₁ dieser Uhr gesendet wird und die n-te Nachricht Mₙ zum Zeitpunkt tₙ=t₁+(n-1)_{*}ΔT_{E}+δ gesendet wird,
**dadurch gekennzeichnet, dass** die Initialisierungssequenz mindestens eine Initialisierungsnachricht umfasst, die die Information über den Zeitpunkt t₁ der Sendung der ersten Informationsnachricht M₁ enthält, wobei jede Nachricht Mₙ mit Hilfe eines zum Zeitpunkt tₙ der Sendung dieser Nachricht gehörenden dynamischen Codes Cₙ codiert ist; und
die von der empfangenden Plattform (20) empfangenen Nachrichten in Abhängigkeit von ihrem Empfangszeitpunkt tᵣ auf der Basis einer der empfangenden Plattform (20) gehörenden Uhr verarbeitet werden, so dass die in einem Beobachtungsfenster Fₙ in Nähe von tₙ empfangenen Nachrichten mit einer Decodierungssequenz DCₙ decodiert werden, die zum Decodieren des dynamischen Codes Cₙ ausgelegt ist, wobei diese Uhr der empfangenden Plattform (20) bei Empfang der ersten Nachricht M₁ auf den Zeitpunkt t₁ eingestellt wird.

2. Verfahren zum gesicherten Austausch von Informationsnachrichten nach Anspruch 1, **dadurch gekennzeichnet, dass** bei der Initialisierungssequenz a) einerseits eine codierte Initialisierungsnachricht M₀ von der sendenden Plattform (10) zur empfangenden Plattform (20) gesendet wird und andererseits eine codierte Initialisierungsnachricht M'₀ von der empfangenden Plattform (20) zur sendenden Plattform (10) gesendet wird, wobei diese Initialisierungsnachrichten M₀, M'₀ die Information über den Sendezeitpunkt t₁ der ersten Informationsnachricht M₁ enthalten, wobei diese Initialisierungsnachrichten M₀, M'₀ durch die sendende Plattform (10) und die empfangende Plattform (20) decodiert werden, die nun den Sendezeitpunkt t₁ der ersten Informationsnachricht M₁ kennen.

3. Verfahren zum gesicherten Austausch von Informationsnachrichten nach einem der Ansprüche 1 bis 2, **dadurch gekennzeichnet, dass** im Fall des Nichtempfangs der ersten Nachricht M₁ in einer zugewiesenen Zeit nach dem Empfang der Initialisierungsnachricht die Uhr der sendenden Plattform (20) in dem dem Ende der zugewiesenen Zeit entsprechenden Moment automatisch auf den Zeitpunkt t₁ eingestellt wird.

4. Verfahren zum gesicherten Austausch von Informationsnachrichten, nach einem der Ansprüche 1 bis 3, **dadurch gekennzeichnet, dass** das Beobachtungsfenster Fₙ einem Zeitfenster [t₁+(n-1)_{*}ΔT_{E}-ΔT_{F}*ε, t₁+(n-1)_{*}ΔT_{E}+ΔT_{F}*(1-ε)] entspricht, worin ΔT_{F} der Breite des Beobachtungsfensters entspricht und der Beziehung ΔT_{F}≤ΔT_{E} entspricht und worin ε zwischen 0 und 1 beträgt.

5. Verfahren zum gesicherten Austausch von Informationsnachrichten nach einem der Ansprüche 1 bis 4, **dadurch gekennzeichnet, dass** von der sendenden Plattform (10) zwischen der Sendung der Nachrichten Mₙ regelmäßig ein Uhrsynchronisationssignal gesendet wird, wobei dieses Synchronisierungssignal verwendet wird, um die Frequenz oder die Phase der internen Uhr der empfangenden Plattform (20) dynamisch zu korrigieren, um die Phasen- oder Frequenzabweichung zwischen den internen Uhren der sendenden Plattform (10) und der empfangenden Plattform (20) zu reduzieren.

6. Verfahren zum gesicherten Austausch von Informationsnachrichten nach einem der Ansprüche 1 bis 5, **dadurch gekennzeichnet, dass** die von der empfangenden Plattform (20) decodierten Informationsnachrichten zu einem Modul (6) zur Verarbeitung der Information übertragen werden.

7. Verfahren zum gesicherten Austausch von Informationsnachrichten nach einem der Ansprüche 1 bis 6, **dadurch gekennzeichnet, dass** die von der empfangenden Plattform (20) während eines Beobachtungsfensters Fₙ empfangenen Nachrichten sequentiell in einem Speicher gespeichert werden, der jedes Mal nur eine Nachricht speichern kann, und dass nur die in diesem Speicher am Ende dieses Beobachtungsfensters Fₙ gespeicherte Nachricht zu dem Modul (6) zur Verarbeitung der Information übertragen wird.

8. Verfahren zum gesicherten Austausch von Informationsnachrichten nach einem der Ansprüche 1 bis 7, **dadurch gekennzeichnet, dass** die sendende Plattform (10) zu einer zentralisierten Steuerstation (1) eines Eisenbahnverkehrsupervisions- und-leitsystems gehört und die empfangende Plattform (20) zu einer am Rand eines Eisenbahngleises angeordneten feststehenden Anlage (2) gehört und dass das Modul (6) zur Verarbeitung der Information aus einer Steuereinrichtung besteht, die an Bord eines Zuges (5) angeordnet ist, der auf einer der feststehenden Anlage (2) zugeordneten Blockstrecke fährt.
